# EUROPEAN PATENT SPECIFICATION

(11) **EP 4 053 226 B1**
(45) Date of publication and mention of the grant of the patent: **26.02.2025**
(21) Application number: 20881689.2
(22) Date of filing: 27.08.2020
(51) Int. Cl.: C09D 5/16, C08L 83/04, C09D 201/00, C09D 7/65

(54) **PAINT ADDITIVE, PAINT COMPOSITION, AND COATING LAYER**
LACKZUSATZ, LACKZUSAMMENSETZUNG UND DECKSCHICHT
ADDITIF POUR PEINTURE, COMPOSITION DE PEINTURE, ET COUCHE DE REVÊTEMENT

(30) Priority: 29.10.2019 JP 2019196466
(43) Date of publication of application: 07.09.2022
(73) Proprietor: Shin-Etsu Chemical Co., Ltd., Tokyo 100-0005 (JP)
(72) Inventor: GOTO, Tomoyuki, Annaka-shi, Gunma 379-0224 (JP)
(74) Representative: Sonnenhauser, Thomas Martin
(86) International application number: PCT/JP2020/032426
(87) International publication number: WO 2021/084880

(56) References cited:
- EP-A1- 3 147 307
- EP-A1- 3 492 513
- WO-A1-2013/100207
- WO-A1-2018/029966
- WO-A2-2014/030770
- JP-A- 2001 039 819
- JP-A- 2004 250 699
- JP-A- 2010 013 591
- JP-A- 2010 525 131
- JP-A- 2017 088 808
- JP-A- 2018 080 275
- JP-A- H06 322 294

## Description

### TECHNICAL FIELD

The present invention relates to: a paint additive containing a siloxane-branched polyether-modified silicone; a paint composition containing the paint additive; and a coating layer; and, in further detail, a paint composition and a coating layer with antifouling performance.

### BACKGROUND ART

In recent years, coatings with paints are performed so as to prevent dirt in various uses including: electric appliances, such as portable telephones, personal computers, televisions, and plasma displays; transportation equipment, such as motor vehicles and trains; and further various everyday necessities.

As a paint with excellent antifouling property, generally, a composition using an additive which contains fluorine in a molecule (Patent Document 1) is known. However, because the material is expensive, and from the standpoint of environmental issues, fluorine-free additives are required.

As a fluorine-free paint additive, a polyether-modified silicone is widely used as paint additive for reasons of surface leveling property, defoaming property, etc. (Patent Document 2). However, a polyether-modified silicone imparting excellent antifouling performance is not known.

On the other hand, as a polyether-modified silicone for enhancing an emulsifying property for cosmetics, a siloxane-branched polyether-modified silicone produced by addition reaction of a polyoxyalkylene compound and a silicone compound to an organohydrogenpolysiloxane is known (Patent Document 3). However, the document does not disclose applications for paints at all. EP 3 492 513 A1 discloses a process for the production of SiOC-linked polyethersiloxanes branched in the siloxane portion starting from cyclic-branched siloxanes of the D/T type. WO 2013/100207 A1 discloses a liquid organopolysiloxane having fluidity at at least 100°C, a silicon-bonded glycerin derivative group, and a crosslinked structure comprising a carbon-silicon bond at the crosslinking portion. WO 2014/030770 A2 discloses a copolymer comprising: (A) an unsaturated monomer having a carbosiloxane dendrimer structure; and (B) an unsaturated monomer having at least one hydrophilic group in the molecule. EP 3 147 307 A1 discloses a production method of a liquid high-purity polyhydric alcohol derivative-modified silicone or a composition thereof, the method comprising: a capturing step of bringing into an impurity-containing composition containing a liquid polyhydric alcohol derivative-modified silicone and hydrophilic impurities originating from a polyhydric alcohol derivative, the polyhydric alcohol derivative being a hydrophilic modifier of the polyhydric alcohol derivative-modified silicone, into contact with solid particles capable of capturing the hydrophilic impurities, and then capturing the hydrophilic impurities with the solid particles; and a separating step of separating the polyhydric alcohol derivative-modified silicone and the solid particles.

### CITATION LIST

### PATENT LITERATURE

Patent Document 1: JP 2018-070683 A
Patent Document 2: JP 2013-166830 A
Patent Document 3: JP 2001-039819 A
Patent Document 4: EP 3 492 513 A1
Patent Document 5: WO 2013/100207 A1
Patent Document 6: WO 2014/030770 A2
Patent Document 7: EP 3 147 307 A1

### SUMMARY OF INVENTION

### TECHNICAL PROBLEM

The present invention has been made in view of the circumstance. An object of the present invention is to provide: a paint additive and a paint composition with small environmental load and imparting excellent antifouling performance.

### SOLUTION TO PROBLEM

To achieve the object, the present invention provides a paint additive comprising a siloxane-branched polyether-modified silicone shown by an average composition formula (1) R¹ₐR²_{b}R³_{c}S10_{(4-a-b-c)/2} and having a weight-average molecular weight in a range of 500 to 100,000,
wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴;
each R² represents a group shown by a general formula (3) -CₘH₂ₘ-O-(C₂H₄O)_{f}(C₃H₆O)_{g}-R⁵;
each R³ represents an organosiloxane shown by the following general formula (4) 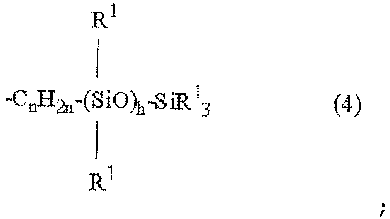
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶- (CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 2≤m≤10;
"h" represents an integer satisfying 0≤h≤500; and
"n" represents an integer satisfying 1≤n≤5.

Such a paint additive can have little environmental load and impart excellent antifouling performance.

Moreover, the paint additive preferably further comprises a solvent.

Such a paint additive can have more excellent workability.

Further, the present invention provides a paint composition comprising the paint additive.

Such a paint composition containing the paint additive successfully reduces environmental load and imparts excellent antifouling performance.

Furthermore, the inventive paint composition preferably comprises a resin selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins.

Such various resins can be employed in the inventive paint composition.

In this case, the resin is preferably a urethane resin or an acrylic resin.

These resins are preferable because of good compatibility with the paint additive containing the siloxane-branched polyether-modified silicone.

In addition, the inventive paint composition is preferably used for antifouling paint.

The inventive paint composition can exhibit excellent antifouling property without impairing various paint properties, such as defoaming property and leveling property.

Further, the present invention provides a coating layer formed from the paint composition.

The inventive coating layer can be applied to various base materials, and exhibit excellent antifouling property.

### ADVANTAGEOUS EFFECTS OF INVENTION

The use of the inventive paint additive containing the siloxane-branched polyether-modified silicone makes it possible to provide the paint composition and coating layer with small environmental load and excellent antifouling property.

### DESCRIPTION OF EMBODIMENTS

As described above, there have been demands for the development of a paint additive and a paint composition with small environmental load and imparting excellent antifouling performance.

The present inventor has diligently investigated to achieve the above object and consequently found that a siloxane-branched polyether-modified silicone imparts excellent antifouling performance to a paint, and completed the present invention.

Specifically, the present invention is a paint additive comprising a siloxane-branched polyether-modified silicone shown by an average composition formula (1) R¹ₐR²_{b}R³_{c}SiO_{(4-a-b-c)/2} and having a weight-average molecular weight in a range of 500 to 100,000, wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴;
each R² represents a group shown by a general formula (3) -CₘH₂ₘ-O-(C₂H₄O)_{f}(C₃H₆O)_{g}-R⁵;
each R³ represents an organosiloxane shown by the following general formula (4) 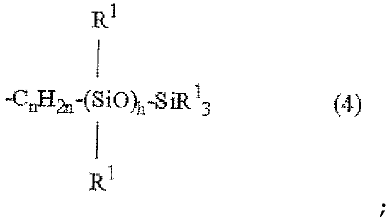
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶-(CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 2≤m≤10;
"h" represents an integer satisfying 0≤h≤500; and
"n" represents an integer satisfying 1≤n≤5.

Hereinafter, the present invention will be described in detail. However, the present invention is not limited thereto but defined in the claims.

### <Paint Additive>

The siloxane-branched polyether-modified silicone contained in the paint additive of the present invention is shown by an average composition formula (1) R¹ₐR²_{b}R³_{c}SiO_{(4-a-b-c)/2}. In the formula (1), each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴. Each R² represents a group shown by a general formula (3) -CₘH₂ₘ-O-(C₂H₄O)_{f}(C₃H₆O)_{g}-R⁵. Each R³ represents an organosiloxane shown by the following general formula (4)

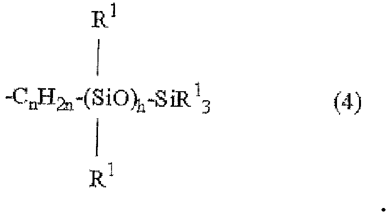

R⁴ represents a hydrocarbon group having 4 to 30 carbon atoms, or an organic group shown by R⁶-(CO)-. R⁵ represents a hydrogen atom, a hydrocarbon group having 1 to 30 carbon atoms, or an organic group shown by R⁶-(CO)-. R⁶ represents a hydrocarbon group having 1 to 30 carbon atoms. R¹ in the general formula (4) is the same as R¹ in the formula (1). "a", "b", and "c" respectively satisfy 1.0≤a≤2.5, 0.001≤b≤1.5, and 0.001≤c≤1.5. "d" and "e" respectively represent integers satisfying 0≤d≤50 and 0≤e≤50. "f" and "g" respectively represent integers satisfying 2≤f≤200, 0≤g≤200, and f+g being 3 to 200. "m" represents an integer satisfying 2≤m≤10. "h" represents an integer satisfying 0≤h≤500. "n" represents an integer satisfying 1≤n≤5.

R¹ in the formulae is an alkyl group, an aryl group, and an aralkyl group having 1 to 30 carbon atoms. R¹ is preferably an alkyl group, an aryl group, and an aralkyl group having 1 to 12 carbon atoms. R¹ is particularly preferably a methyl group, an ethyl group, a propyl group, a hexyl group, an octyl group, a dodecyl group, a phenyl group, and a 2-phenylpropyl group. Preferably, 80% or more of R¹'s are methyl groups.

Alternatively, R¹ may be an alkoxy group, an ester group, an alkenyl ether residue, or an alkenyl ester residue shown by the general formula (2) -CₘH₂ₘ-O-(C₂H₄O)_{d}(C₃H₆O)ₑ-R⁴. Herein R⁴ in the formula (2) is a monovalent hydrocarbon group having 4 to 30 carbon atoms, or an organic group shown by R⁶-(CO)-, and preferably a monovalent hydrocarbon group having 4 to 10 carbon atoms, or an organic group shown by R⁶-(CO)- because of availability. R⁶ is a hydrocarbon group having 1 to 30 carbon atoms, and preferably a hydrocarbon group having 1 to 10 carbon atoms because of availability.

"d", "e" and "m" are respectively integers satisfying 0≤d≤50, 0≤e≤50, and 2≤m≤10, and preferably integers satisfying 0≤d≤30, 0≤e≤30, and 2≤m≤5 because of availability. Incidentally, when the polyoxyalkylene moiety in the formula (2) is composed of both ethyleneoxide units and propyleneoxide units, the polyoxyalkylene moiety may be any of a block polymer and a random polymer of these two units.

R² is a group shown by the general formula (3) - CₘH₂ₘ-O-(C₂H₄O)_{f}(C₃H₆O)_{g}-R⁵. Herein R⁵ in the formula (3) represents a hydrogen atom, a monovalent hydrocarbon group having 1 to 30 carbon atoms, or an organic group shown by R⁶-(CO)-, and preferably a hydrocarbon group having 1 to 10 carbon atoms, a hydrogen atom, or an organic group shown by R⁶-(CO)- because of availability. R⁶ is as defined above.

"f" and "g" are respectively integers satisfying 2≤f≤200 and 0≤g≤200, and preferably integers satisfying 2≤f≤50 and 0≤g≤50 because of availability. Further, f+g is an integer satisfying 3 to 200, and preferably an integer satisfying 5 to 100. If f+g is smaller than 3, the antifouling property lowers. If f+g is larger than 200, the synthesis is hindered. "m" is as defined above.

Incidentally, like the formula (2), when the polyoxyalkylene moiety in the formula (3) is composed of both ethyleneoxide units and propyleneoxide units, the polyoxyalkylene moiety may be any of a block polymer and a random polymer of these two units.

R³ is an organosiloxane shown by the following general formula (4).

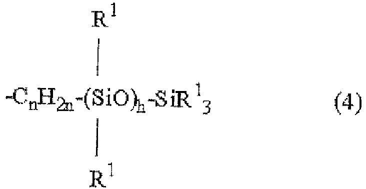

R¹ is as defined above. "h" is an integer satisfying 0≤h≤500, and preferably an integer satisfying 1≤h≤100. "n" is an integer satisfying 1≤n≤5, and preferably 2 because of availability. If "h" is larger than 500, the synthesis is hindered, and the compatibility with a resin is lowered as the paint composition in some cases.

"a", "b", and "c" respectively satisfy 1.0≤a≤2.5, preferably 1.0≤a≤2.3. 0.001≤b≤1.5, preferably 0.05≤b≤1.0, and 0.001≤c≤1.5, preferably 0.01≤c≤1.0. If "a" and "b" deviates from the range, the compatibility is unstable as the paint composition. Further, when "c" is below 0.001, the antifouling property as the paint composition decreases, and when more than 1.5, the compatibility is unstable as the paint composition.

Further, the siloxane-branched polyether-modified silicone shown by the formula (1) has a weight-average molecular weight of 500 to 100,000, preferably 1,000 to 80,000, and particularly preferably 1,500 to 40,000, in terms of polystyrene according to GPC. When the weight-average molecular weight is less than 500, the antifouling property lowers. When the weight-average molecular weight is more than 100,000, the resulting silicone has such high viscosity that it is difficult to handle, and further the compatibility with a resin is lowered as the paint composition in some cases.

The siloxane-branched polyether-modified silicone contained in the inventive paint additive can be obtained by a known method. For example, as described in Patent Document 3 (JP 2001-039819 A), the siloxane-branched polyether-modified silicone can be easily synthesized by subjecting an organohydrogenpolysiloxane to addition reaction with an alkenyl group-containing organosiloxane and an alkenyl group-containing polyoxyalkylene compound in the presence of a platinum or rhodium catalyst.

Moreover, the inventive paint additive may be the siloxane-branched polyether-modified silicone only, or may further contain a solvent in addition to the siloxane-branched polyether-modified silicone. When the inventive paint additive contains a solvent and is added to a paint composition, homogenizing by stirring becomes easier. Further, the paint additive may contain other components as necessary.

As the solvent which may be blended to the inventive paint additive, for example, it is possible to use one explained in the description of the paint composition described below. Preferable ones are propylene glycol monomethyl ether acetate and butyl acetate. Furthermore, when the inventive paint additive contains a solvent, for example, the paint additive may be a 10 to 90% solution of the siloxane-branched polyether-modified silicone, preferably 10 to 50% solution, and particularly preferably 15 to 30% solution.

### <Paint Composition>

Furthermore, the present invention provides a paint composition containing the paint additive. The paint composition is used particularly for antifouling paint.

The addition amount of the siloxane-branched polyether-modified silicone (that is, the effective component contained in the inventive paint additive) is 0.01 to 10 parts by mass, preferably 0.1 to 5 parts by mass, of 100 parts by mass of the inventive paint composition. With these ranges of the addition amount, dirt prevention corresponding to the addition amount is surely obtained, which is cost effective.

The inventive paint composition preferably contains a resin. The resin is not particularly limited, and is selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins. The resin is preferably a urethane resin or an acrylic resin in view of the compatibility with the paint additive containing the siloxane-branched polyether-modified silicone.

The addition amount of the resin is 10 to 99.5 parts by mass, preferably 25 to 90 parts by mass, of 100 parts by mass of the inventive paint composition. With the resin content being 10 parts by mass or more, there is no fear of decrease of mechanical strength.

The inventive paint composition can be optionally blended with other well-known components in the industry as appropriate, such as a curing agent, a dilution solvent, a ultraviolet absorber, a polymerization initiator, a polymerization inhibitor, a neutralizing agent, a stabilizer (a light-resistant stabilizer, a weather-resistant stabilizer, a heat-resistant stabilizer), an antioxidant, a leveling agent, a defoaming agent, a viscosity adjuster, a precipitation-inhibitor, a pigment, a dye, a dispersant, an antistatic agent, an anti-fog agent, and a rubber.

Examples of the curing agent include aliphatic polyisocyanate (hexamethylene diisocyanate trimer) (DESMODUR N 3390 BA/SN manufactured by Covestro AG), etc. The amount of the curing agent is not particularly limited, and may be 1 to 30 parts by mass, preferably 3 to 15 parts by mass, of 100 parts by mass of the inventive paint composition.

Examples of the dilution solvent include propylene glycol monomethyl ether acetate, butyl acetate, ester, aliphatic hydrocarbon, aromatic hydrocarbon, ketone, and alcohol. Propylene glycol monomethyl ether acetate and butyl acetate are preferable. The amount of the dilution solvent is not particularly limited, and may be 10 to 90 parts by mass, preferably 20 to 70 parts by mass, of 100 parts by mass of the inventive paint composition.

The inventive paint composition has a viscosity (25°C, B-type viscometer) of, for example, 1 to 10,000 mPa·s, preferably 10 to 5,000 mPa·s, in consideration of the coatability, film thickness, etc.

### <Coating Layer>

Further, the present invention relates to a coating layer using the paint composition.

Various methods to be applied for typical paints are available as the coating method with the paint composition for obtaining the inventive coating layer. Specifically, examples thereof include spray coating, spin coating, roll coating, curtain coating, brushing, electrostatic coating, anionic and cationic electrodeposition coating, dipping, etc. In addition, the curing method after coating is not particularly limited and examples thereof include (heat) curing particularly at 0 to 200°C, more preferably 40 to 180°C.

Moreover, examples of base materials to which the coating layer is applied (materials to be coated) include: plastics such as polystyrene resins, acrylic resins, acrylonitrile-styrene-butadiene resins (ABS), polypropylene, ethylene-propylene resins, polycarbonate resins, Noryl resins, nylon resins, polyester resins, and blends (alloys) of these resins with, for example, polyolefins, fillers, and reinforcement materials, such as glasses and carbon fibers; thermosetting resins, such as epoxy resins, unsaturated polyester resins, and urethane resins; inorganic materials, such as glasses, mortars, asbestos-cement slates, and rocks; metals, such as iron (and alloys), copper (and alloys), aluminum (and alloys), and magnesium (and alloys); combustible materials, such as papers and vinyl fabrics; etc.

### EXAMPLE

Hereinafter, the present invention will be specifically described with reference to Examples and Comparative Examples. However, the present invention is not limited thereto. Incidentally, in a case where multiple repeating units, each of which is shown in the parentheses, are included in the structural formulae described below, these units are arranged at random.

### [Synthesis Example 1]

In a reactor, 250 g of organohydrogensiloxane shown by the following structural formula (I), 87 g of organosiloxane shown by the following structural formula (i), and 150 g of isopropyl alcohol were mixed, and 0.05 g of isopropyl alcohol solution of 3% by mass chloroplatinic acid was added. This mixture was allowed to react at 80°C for 4 hour.

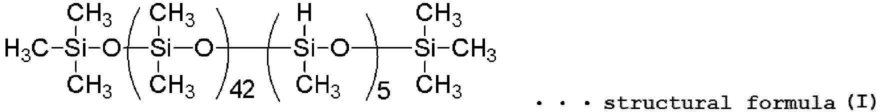

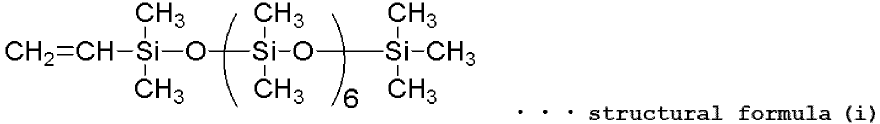

Then, 110 g of polyoxyalkylene compound of the following structural formula (a) was added, and the reaction was further continued for 3 hours.

CH₂=CHCH₂O(C₂H₄O)₉H ··· structural formula (a)

After completion of the reaction, the obtained solution was heated under reduced pressure to distill the solvent to give a compound (A) of organopolysiloxane shown by the following structural formula in a yield of 95%. The weight-average molecular weight of the obtained compound (A) was 6,200.

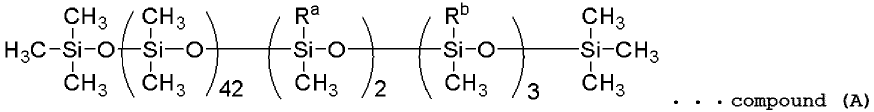

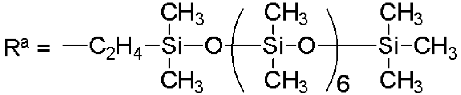

R^{b} = -C₃H₆O(C₂H₄O)₉H

### [Synthesis Example 2]

A compound (B) of the following formula was obtained in a yield of 95% as in Synthesis Example 1, except that 250 g of organohydrogensiloxane shown by the following structural formula (II) was used instead of one in the structural formula (I) in Synthesis Example 1, the addition amount of organosiloxane of the structural formula (i) was changed to 62 g, and the addition amount of polyoxyalkylene compound of the structural formula (a) was changed to 125 g. The weight-average molecular weight of the obtained compound (B) was 8,500.

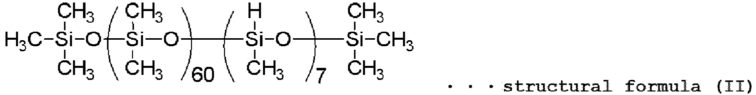

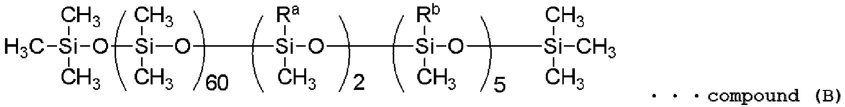

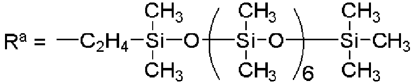

R^{b} = -C₃H₆O(C₂H₄O)₉H

### [Example 1]

0.4 g of 25% propylene glycol monomethyl ether acetate solution of the compound (A) obtained in Synthesis Example 1 was added as the paint additive to 20 g of 60% hydroxy functional acrylic resin solution (MACRYNAL SM 510n/60LG manufactured by Allnex GMBH), 10 g of propylene glycol monomethyl ether acetate, and 10 g of butyl acetate. Then, 4.0 g of aliphatic polyisocyanate (hexamethylene diisocyanate trimer) (DESMODUR N 3390 BA/SN manufactured by Covestro AG) was further added as the curing agent, mixed by using a dispersion mixer until uniform to prepare a paint composition. After being left standing for 30 minutes, the obtained paint composition was coated on glass using an applicator so as to have the thickness of 30 pm, and heated and cured at 80°C for 40 minutes to form a coating layer (1). The obtained coating layer (1) was subjected to various evaluations as follows.

### Defoaming Property

The paint composition was uniformly mixed by using a dispersion mixer and left standing for 10 minutes. Then, the state of the paint composition was observed. Excellent: no foams.
Fair: a few fine foams.
Bad: a lot of foams.

### Leveling Property

The surface state of the coating layer on the glass was visually observed.
Excellent: smooth surface state.
Fair: fine craters in places on surface.
Bad: large craters and waves on surface.

### Antifouling Property

A line was drawn with a marker pen on the coating layer on the glass, and rubbed with tissue paper. The easiness for erasing the line was evaluated in this event.
Excellent: the line was easily erased.
Fair: the line was erased by repeatedly rubbing the
layer with force.
Bad: the line was not erased.

### [Example 2]

A coating layer (2) was formed and the various properties thereof were evaluated as in Example 1, except that 25% propylene glycol monomethyl ether acetate solution of the compound (B) was used instead of 25% propylene glycol monomethyl ether acetate solution of the compound (A) in Example 1.

### [Comparative Example 1]

A coating layer (3) was formed and the various properties thereof were evaluated as in Example 1, except that the 25% propylene glycol monomethyl ether acetate solution of the compound (A) in Example 1 was not added.

### [Comparative Example 2]

A coating layer (4) was formed and the various properties thereof were evaluated as in Example 1, except that 25% propylene glycol monomethyl ether acetate solution of the compound (C) of the following formula (weight-average molecular weight: 6,100) was used instead of 25% propylene glycol monomethyl ether acetate solution of the compound (A) in Example 1.

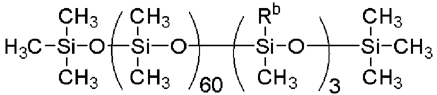

R^{b} = -C₃H₆O(C₂H₄O)₉H ··· compound (C)

### [Comparative Example 3]

A coating layer (5) was formed and the various properties thereof were evaluated as in Example 1, except that 25% propylene glycol monomethyl ether acetate solution of the compound (D) of the following formula (weight-average molecular weight: 8,300) was used instead of 25% propylene glycol monomethyl ether acetate solution of the compound (A) in Example 1.

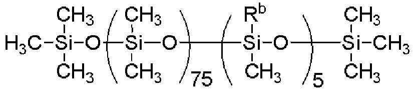

R^{b} = -C₃H₆O(C₂H₄O)₉H ·· ·compound (D)

The following Table 1 shows the results of Examples 1 and 2, and Comparative Examples 1, 2, and 3.

**[Table 1]**

| | Example 1 | Example 2 | Comparative Example 1 | Comparative Example 2 | Comparative Example 3 |
|---|---|---|---|---|---|
| | Coating layer (1) | Coating layer (2) | Coating layer (3) | Coating layer (4) | Coating layer (5) |
| Defoaming Property | Excellent | Excellent | Fair | Excellent | Excellent |
| Leveling Property | Excellent | Excellent | Bad | Excellent | Excellent |
| Antifouling Property | Excellent | Excellent | Bad | Bad | Fair |

As shown in Table 1, it was revealed that the coating layers (1) and (2) formed from the paint compositions using the inventive paint additives exhibited excellent antifouling property without impairing defoaming property and leveling property.

On the other hand, Comparative Example 1 using the paint composition without the additive failed to obtain good results in all of defoaming property, leveling property and antifouling property. Further, in Comparative Examples 2 and 3, each coating layer was formed from the paint composition using the additive containing the polyether-modified silicone. However, because these additives did not have the structure of the general formula (4) unlike the inventive paint additives, the coating layers failed to obtain good results in antifouling property either.

## Claims

1. A paint additive comprising a siloxane-branched polyether-modified silicone shown by an average composition formula (1) R¹ₐR²_{b}R³_{c}SiO_{(4-a-b-c)/2} and having a weight-average molecular weight in a range of 500 to 100,000,
wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴;
each R² represents a group shown by a general formula (3) -CₘH₂ₘ-O-(C₂H₄O)_{f}(C₃H₆O)_{g}-R⁵;
each R³ represents an organosiloxane shown by the following general formula (4) 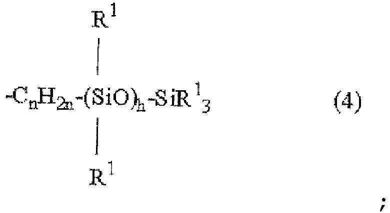
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶-(CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 2≤m≤10;
"h" represents an integer satisfying 0≤h≤500; and
"n" represents an integer satisfying 1≤n≤5.

2. The paint additive according to claim 1, further comprising a solvent.

3. A paint composition comprising the paint additive according to claim 1 or 2.

4. The paint composition according to claim 3, comprising a resin selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins.

5. The paint composition according to claim 4, wherein the resin is a urethane resin or an acrylic resin.

6. The paint composition according to any one of claims 3 to 5, the composition being used for antifouling paint.

7. A coating layer formed from the paint composition according to any one of claims 3 to 6.

## Patentansprüche

1. Farbadditiv, umfassend ein siloxanverzweigtes, polyethermodifiziertes Silicon, das durch eine durchschnittliche Zusammensetzungsformel (1) dargestellt wird R¹ₐR²_{b}R³_{c}SiO_{(4-a-b-c)/2} und ein gewichtsmittleres Molekulargewicht im Bereich von 500 bis 100.000 aufweist, wobei in der Formel (1) jedes R¹ identisch oder voneinander verschieden ist und eine organische Gruppe, ausgewählt aus einer Alkylgruppe, einer Arylgruppe und einer Aralkylgruppe mit 1 bis 30 Kohlenstoffatomen, und eine organische Gruppe, dargestellt durch eine allgemeine Formel (2) -CₘH₂ₘ-O-(C₂H₄O)_{d}(C₃H₆O)ₑR⁴ darstellt;
jedes R² stellt eine Gruppe der allgemeinen Formel (3) -CₘH₂ₘ-O-(C₂H₄O)_{f}(C₃H₆O)_{g}-R⁵ dar;
jedes R³ stellt ein Organosiloxan der folgenden allgemeinen Formel (4) dar 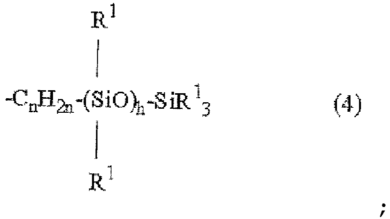
R⁴ ist eine Kohlenwasserstoffgruppe mit 4 bis 30 Kohlenstoffatomen oder eine organische Gruppe, dargestellt durch R⁶-(CO)-;
R⁵ ist ein Wasserstoffatom, eine Kohlenwasserstoffgruppe mit 1 bis 30 Kohlenstoffatomen oder eine organische Gruppe, dargestellt durch R⁶-(CO)-;
R⁶ steht für eine Kohlenwasserstoffgruppe mit 1 bis 30 Kohlenstoffatomen;
R¹ in der allgemeinen Formel (4) ist das gleiche wie R¹ in der Formel (1);
"a", "b" und "c" erfüllen jeweils die Bedingungen 1,0≤a≤2,5, 0,001≤b≤1,5 und 0,001≤c≤1,5;
"d" und "e" stellen jeweils ganze Zahlen dar, die 0≤d≤50 und 0≤e≤50 erfüllen;
"f" und "g" stellen jeweils ganze Zahlen dar, die die Bedingungen 2≤f≤200, 0≤g≤200 erfüllen, wobei f+g 3 bis 200 ist;
"m" steht für eine ganze Zahl, die 2≤m≤10 erfüllt;
"h" steht für eine ganze Zahl, die 0≤h≤500 erfüllt; und
"n" steht für eine ganze Zahl, die 1≤n≤5 erfüllt.

2. Farbadditiv nach Anspruch 1, das außerdem ein Lösungsmittel enthält.

3. Farbzusammensetzung, die das Farbadditiv nach Anspruch 1 oder 2 enthält.

4. Farbzusammensetzung nach Anspruch 3, die ein Harz enthält, das aus der Gruppe ausgewählt ist, die aus Urethanharzen, Acrylharzen, Amidharzen, Phenolharzen, Epoxidharzen, Melaminharzen, Harnstoffharzen, Alkydharzen, Polyimidharzen, Polyalkylenharzen, Polyvinylchlorid, Polystyrol, Polyvinylacetat und Legierungen dieser Harze besteht.

5. Farbzusammensetzung nach Anspruch 4, wobei das Harz ein Urethanharz oder ein Acrylharz ist.

6. Farbzusammensetzung nach einem der Ansprüche 3 bis 5, wobei die Zusammensetzung als Antifouling-Farbe verwendet wird.

7. Überzugsschicht, die aus der Farbzusammensetzung nach einem der Ansprüche 3 bis 6 gebildet wird.

## Revendications

1. Additif de peinture comprenant un silicone modifié par polyéther ramifié par siloxane représenté par une formule de composition moyenne (1) R¹ₐR²_{b}R³_{c}SiO_{(4-a-b-c)/2} et ayant une masse moléculaire moyenne en poids dans une plage de 500 à 100 000,
dans lequel dans la formule (1) chaque R¹ est identique ou différent des autres et représente un groupe organique choisi parmi un groupe alkyle, un groupe aryle et un groupe aralkyle ayant de 1 à 30 atomes de carbone, et un groupe organique représenté par une formule générale (2) -CₘH₂ₘ-O-(C₂H₄O)_{d}(C₃H₆O)ₑR⁴ ;
chaque R² représente un groupe représenté par une formule générale (3) -CₘH₂ₘ-O-(C₂H₄O)_{f}(C₃H₆O)_{g}-R⁵ ;
chaque R³ représente un organosiloxane représenté par la formule générale (4) suivante 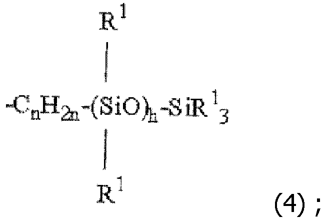
R⁴ représente un groupe hydrocarboné ayant de 4 à 30 atomes de carbone, ou un groupe organique représenté par R⁶-(CO)- ;
R⁵ représente un atome d'hydrogène, un groupe hydrocarboné ayant de 1 à 30 atomes de carbone, ou un groupe organique représenté par R⁶-(CO)- ;
R⁶ représente un groupe hydrocarboné ayant de 1 à 30 atomes de carbone ;
R¹ dans la formule générale (4) est identique à R¹ dans la formule (1) ;
« a », « b » et « c » satisfont respectivement 1,0 ≤ a ≤ 2,5, 0,001 ≤ b ≤ 1,5 et 0,001 ≤ c ≤ 1,5 ;
« d » et « e » représentent respectivement des nombres entiers satisfaisant a ≤ d ≤ 50 et 0 ≤ e ≤ 50 ;
« f » et « g » représentent respectivement des nombres entiers satisfaisant 2 ≤ f ≤ 200, 0 ≤ g ≤ 200, et f+g étant compris entre 3 et 200 ;
« m » représente un nombre entier satisfaisant 2 ≤ m ≤ 10 ;
« h » représente un nombre entier satisfaisant 0 ≤ h ≤ 500 ; et
« n » représente un nombre entier satisfaisant 1 ≤ n ≤ 5.

2. Additif de peinture selon la revendication 1, comprenant en outre un solvant.

3. Composition de peinture comprenant l'additif de peinture selon la revendication 1 ou 2.

4. Composition de peinture selon la revendication 3, comprenant une résine choisie dans le groupe constitué par les résines uréthanes, les résines acryliques, les résines amides, les résines phénoliques, les résines époxy, les résines mélamine, les résines urée, les résines alkydes, les résines polyimides, les résines polyalkylène, le chlorure de polyvinyle, le polystyrène, l'acétate de polyvinyle et les alliages des résines.

5. Composition de peinture selon la revendication 4, dans laquelle la résine est une résine uréthane ou une résine acrylique.

6. Composition de peinture selon l'une quelconque des revendications 3 à 5, la composition étant utilisée pour de la peinture antisalissure.

7. Couche de revêtement formée à partir de la composition de peinture selon l'une quelconque des revendications 3 à 6.
